# EUROPÄISCHE PATENTSCHRIFT

(11) **EP 4 514 632 B1**
(45) Veröffentlichungstag und Bekanntmachung des Hinweises auf die Patenterteilung: **04.03.2026**
(21) Anmeldenummer: 23711666.0
(22) Anmeldetag: 06.03.2023
(51) Int. Cl.: B60C 11/12, B60C 11/13

(54) **FAHRZEUGREIFEN**
VEHICLE TIRE
PNEU DE VÉHICULE

(30) Priorität: 25.04.2022 DE 102022203957
(43) Veröffentlichungstag der Anmeldung: 05.03.2025
(73) Patentinhaber: Continental Reifen Deutschland GmbH, 30175 Hannover (DE)
(72) Erfinder: BEHR, Ulrich, 30175 Hannover (DE); HERBST, Stephan, 30175 Hannover (DE); KHOO, Jan-Sen, 30175 Hannover (DE)
(74) Vertreter: Continental Corporation
(86) Internationale Anmeldenummer: PCT/DE2023/200043
(87) Internationale Veröffentlichungsnummer: WO 2023/208287

(56) Entgegenhaltungen:
- EP-A1- 1 580 032
- EP-A1- 3 015 286
- EP-A1- 3 208 113
- DE-A1- 102014 213 660
- DE-A1- 102018 208 670
- US-A1- 2016 318 352
- US-A1- 2021 129 592

## Beschreibung

Die Erfindung betrifft einen Fahrzeugluftreifen mit einem Laufstreifen mit zumindest einer in Umfangsrichtung umlaufenden, an zumindest einer Seite von einer Umfangsrille begrenzten Profilrippe mit einer an der Laufstreifenperipherie befindlichen Außenfläche und mit insbesondere parallel zueinander und unter einem Winkel von bis zu 45° zur axialen Richtung verlaufenden Einschnitten, welche in zumindest eine Umfangsrille münden und innerhalb der Profilrippe enden oder einen innerhalb der Profilrippe endenden, in die Umfangsrille mündenden Einschnittabschnitt aufweisen, wobei die innerhalb der Profilrippe endenden Einschnitte bzw. die Einschnittabschnitte über ihre Erstreckung jeweils eine in radialer Richtung zwischen dem Einschnittgrund und der Außenfläche der Profilrippe verlaufende Einschnittwand und dieser gegenüberliegend eine mit einer Fase kombinierte, ebenfalls in radialer Richtung verlaufende weitere Einschnittwand aufweisen, wobei die Fase zur Außenfläche der Profilrippe und, im Querschnitt des jeweiligen Einschnittes bzw. Einschnittabschnittes betrachtet, zur radialen Richtung unter einem spitzen Winkel verläuft, wobei zwischen der Fase und der weiteren Einschnittwand, vorzugsweise in einer konstanten Tiefe und vorzugsweise parallel zur Außenfläche der Profilrippe verlaufend, ein eine Breite von 0,30 mm bis 0,80 mm aufweisendes Plateau ausgebildet ist, wobei sich der Winkel der Fase relativ zur radialen Richtung von ihrem profilrippeninnenseitigen Ende bis zu ihrem umfangsrillenseitigen Ende kontinuierlich verkleinert.

Ein derartiger Fahrzeugluftreifen ist beispielsweise aus der DE 10 2018 208 670 A1 bekannt. Dieser Fahrzeugluftreifen weist einen Laufstreifen mit einer beidseitig von Umfangsrillen begrenzten Profilrippe auf, welche mit durchquerenden Einschnitten versehen ist, die, in Draufsicht betrachtet, jeweils aus in die Umfangsrillen einmündenden, randseitigen Einschnittabschnitten und einem zentralen Einschnittabschnitt zusammengesetzt sind. Die randseitigen Einschnittabschnitte weisen jeweils eine in die axiale Richtung projizierte Länge von 20% bis 40%, insbesondere von 25% bis 25%, der Breite der Profilrippe an der Rippenaußenfläche auf. In jedem randseitigen Einschnittabschnitt ist die eine Einschnittwand bis zur Außenfläche der Profilrippe fortgeführt und die andere Einschnittwand ist mit einer zur Außenfläche der Profilrippe verlaufenden Fase kombiniert, welche, im Querschnitt betrachtet, zur radialen Richtung unter einem Winkel von 30° bis 70, insbesondere von 40° bis 50°, geneigt ist, wobei der Winkel der Fase ausgehend von der jeweiligen Umfangsrille insbesondere um 1° bis 3° in Richtung zum zentralen Einschnittabschnitt kontinuierlich zunimmt und sich daher vom profilrippeninnenseitigen Ende der Fase zum umfangsrillenseitigen Ende der Fase kontinuierlich verkleinert. Zwischen der Fase und der Einschnittwand ist ein insbesondere entlang eines Radius gekrümmtes Plateau mit einer Breite von 0,5 mm bis 1,2 mm ausgebildet. In den randseitigen Einschnittabschnitten ist jeweils in einem Abstand zur nächstliegenden Umfangsrille eine Erhebung ausgebildet, welche eine im Längsschnitt des Einschnittes verkehrt U-förmig gestaltete Deckfläche und an diese knickfrei anschließende, entgegengesetzt zur U-Form der Deckfläche gekrümmte Seitenflächen aufweist. Die Erhebungen sind für die Stabilisierung der Profilrippenrandbereiche günstig, wobei sie durch ihre Deckfläche derart ausgeführt sind, dass ein weitgehend verwirbelungsfreies Ableiten von vom Einschnitt aufgenommenem Wasser möglich und derart die Entwässerung der Profilrippe verbessert ist. Die Fasen begünstigen ein verwirbelungsarmes Einströmen von Wasser in den Einschnitt und vergrößern lokal die Querschnittsfläche des Einschnittes an der Laufstreifenperipherie, wodurch die Entwässerung weiter verbessert ist.

Aus der EP 3 208 113 A1 ist ein Fahrzeugluftreifen mit einem Laufstreifen mit innerhalb von Profilrippen angeordneten Profilblöcken bekannt, welche, in Draufsicht durch in axialer Richtung verlaufende Querrillen voneinander getrennt und jeweils von einer Anzahl parallel zu den Querrillen verlaufenden Einschnitten durchquert sind. Die Einschnitte weisen über ihren Verlauf vorzugsweise einen im Wesentlichen gleichbleibenden Querschnitt auf. Jeder Einschnitt ist durch zwei Einschnittwände und einen Einschnittgrund begrenzt. Gemäß einem Ausführungsbeispiel verläuft die eine Einschnittwand in radialer Richtung bis zur Laufstreifenaußenfläche und die andere Einschnittwand ist mit einer Fase kombiniert, wobei zwischen der Fase und der Einschnittwand ein Plateau ausgebildet ist. Die Fase verläuft, im Querschnitt betrachtet, gerade sowie zur radialen Richtung unter einem Winkel von 30° bis 70°, insbesondere von 40° bis 50°, wobei der Winkel vorzugsweise konstant ist und sich alternativ über den Einschnittverlauf ändern kann. Das Plateau bildet eine lokale Einbuchtung und weist eine Breite von 0,5 mm bis 1,2 mm auf. Die Einschnitte können alternativ innerhalb der Profilrippen enden. Durch das eine lokale Einbuchtung bildende Plateau ist das Wasseraufnahmevermögen der Einschnitte erhöht, sodass diese eine gute Entwässerungswirkung aufweisen und derart insbesondere die Nassbremseigenschaften verbessern sollen.

Ferner ist aus der DE 10 2015 202 613 A1 ein Fahrzeugluftreifen mit einem Laufstreifen bekannt, der zumindest eine von Umfangsrillen begrenzte Profilrippe aufweist, in welcher eine Vielzahl von Quereinschnitten ausgebildet ist. Die Einschnitte sind zumindest in einem Abschnitt ihrer Erstreckung und bei der Rippenaußenfläche durch eine Fase verbreitert. Diese Einschnittabschnitte verlaufen in Draufsicht insgesamt bogenförmig, wobei die Fasen jeweils an der bogeninnenseitig verlaufenden Einschnittwand ausgebildet sind. Die Fasen verlaufen jeweils unter einem konstanten Winkel, welcher im Bereich von 35° bis 50° beträgt, zur radialen Richtung und laufen profilrippeninnenseitig unter Verringerung ihrer Breite und ihrer Tiefe an der Außenfläche der Profilrippe aus. Derart gestaltete Einschnitte in Profilrippen sollen zu seiner Verringerung der Geräuschemission und einer Verbesserung des Nassbremsverhaltens beitragen.

Aus der DE 10 2016 221 954 A1 ist ein Fahrzeugluftreifen mit einem profilierten Laufstreifen bekannt, welcher zumindest eine Profilrippe aufweist, die in axialer Richtung, daher seitlich, von je einer Umfangsrille begrenzt ist. In der Profilrippe sind V-förmig ausgebildete Einschnitte vorhanden, deren V-Abschnitte jeweils in die gleiche Umfangsrille einmünden und deren verbindende Knickstelle innerhalb der Profilrippe liegt. An dem einen V-Abschnitt ist jeweils die eine Einschnittwand im Übergang zur Außenfläche der Profilrippe mit einer Fase versehen. Diese Fase verläuft unter einem über ihre Erstreckung konstanten Winkel zur radialen Richtung, jedoch mit sich ändernder Tiefenerstreckung, derart, dass die Fase am profilrippeninnenseitigen Ende ihre tiefste Stelle und ihre größte Breite aufweist. Ein Reifen mit einem derartigen Laufstreifen soll eine bessere Aquaplaning-Tauglichkeit mit hoher Steifigkeit der Profilrippe zur Erzielung guter Trockenbrems- und Handlingeigenschaften aufweisen.

Darüber hinaus ist eine Vielzahl von Patentveröffentlichungen bekannt, in welchen Fahrzeugluftreifen mit profilierten Laufstreifen mit Profilrippen offenbart sind, in welchen breite Querrillen ausgebildet sind, die innerhalb der Profilrippe enden und deren eine Rillenflanke am Übergang zur Außenfläche der Profilrippe mit einer Fase versehen ist. Einen derart ausgeführten Fahrzeugluftreifen offenbart beispielsweise die EP 3 135 505 B1.

Es ist daher bekannt und üblich, in Profilrippen Querrillen oder Einschnitte auszubilden, die Kanten mit Fasen aufweisen, um ein Einrollen dieser Kanten beim Bremsen zu vermeiden.

Der Erfindung liegt die Aufgabe zugrunde, bei einem Reifen der eingangs genannten Art die Ausgestaltung von Fasen an Einschnitten oder Einschnittabschnitten in Profilrippen von Laufstreifen zur Optimierung der Bremsperformance des Reifens weiter zu verbessern, wobei die Geräuschentwicklung beim Abrollen des Reifens auf einem guten Niveau erhalten bzw. unbeeinflusst bleiben soll.

Gelöst wird die gestellte Aufgabe erfindungsgemäß dadurch, dass der Winkel, den die Fase an ihrem umfangsrillenseitigen Ende mit der radialen Richtung einschließt, um mindestens 10° kleiner ist als der Winkel, den die Fase an ihrem profilrippeninnenseitigen Ende mit der radialen Richtung einschließt, wobei sich der innerhalb der Profilrippe endende Einschnitt bzw. der innerhalb der Profilrippe endende Einschnittabschnitt bezüglich der an der Außenfläche in axialer Richtung ermittelten Breite der Profilrippe zumindest bis in die Mitte der Profilrippe und insbesondere über bis zu 80 % der an der Außenfläche in axialer Richtung ermittelten Breite der Profilrippe erstreckt.

Bei der Erfindung verhindern die Fasen daher nicht nur ein Einrollen der Einschnittkanten, sondern sind derart gestaltet, dass sie im Bereich der Mitte der Profilrippe in Folge ihres großen Winkels relativ zur radialen Richtung ihre größte Ausprägung haben. Dies ist für die Bremsperformance vor allem deshalb von Vorteil, weil der Bodendruck auf die Profilrippe beim Bremsvorgang im mittleren Bereich der Profilrippe am höchsten ist und an den Randbereichen der Profilrippe am geringsten. Darüber hinaus sorgen die Plateaus zwischen den Einschnittwänden und den Fasen für eine für die Ableitung von Wasser vorteilhafte Verbreiterung der Einschnitte. Die Geräuschentwicklung beim Abrollen des Reifens bleibt von den getroffenen Maßnahmen unbeeinflusst bzw. wird nicht negativ beeinflusst.

Die erwähnte gewisse Mindesterstreckung des Einschnittes bzw. Einschnittabschnittes ist vorteilhaft, um eine merkbare Wirkung der Kombination aus Plateau/ Fase zu erzielen.

Bei einer bevorzugten Ausführungsform beträgt der Winkel, den die Fase an ihrem profilrippeninnenseitigen Ende mit der radialen Richtung einschließt, 20° bis 60°, insbesondere 30° bis 45°. Bei einer besonders bevorzugten Ausführung beträgt der Winkel, den die Fase an ihrem umfangsrillenseitigen Ende mit der radialen Richtung einschließt, 0° bis 10°, insbesondere 0° bis 5°. Derart gestaltete und verlaufende Fasen zeigen eine besonders effektive Wirkung auf die Bremsperformance des Reifens.

Bei einer weiteren vorteilhaften Ausführung beträgt die Tiefe, in welcher sich das Plateau ausgehend von der Außenfläche der Profilrippe in radialer Richtung befindet, 1,50 mm bis 3,00 mm. Die Fasen sind daher bezüglich ihrer flächigen Ausprägung derart ausführbar, dass ein Kanteneinrollen besonders effektiv vermieden wird und gleichzeitig die Bremsperformance optimiert wird.

Bei einer weiteren vorteilhaften Ausführung weist das Plateau über seine Erstreckung eine konstante Breite auf. Der Verlauf der Fase bzw. ihre Neigung relativ zur radialen Richtung lässt sich auf diese Weise besonders gut an die Entwässerungswirkung des Einschnittes anpassen.

Vorteilhafterweise weist ferner der Einschnitt bzw. der Einschnittabschnitt radial innerhalb des Plateaus eine Breite von 0,40 bis 1,00 mm auf, sodass in diesem Bereich der Einschnitte bzw. Einschnittabschnitte eine gegenseitige Abstützung der Einschnittwände zur Stabilisierung der Profilrippe, etwa beim Bremsen, gewährleistet ist.

Bei einer Ausführung, bei welcher die Kombination Plateau/ Fase in einem Einschnittabschnitt ausgebildet ist, ist es vorteilhaft, wenn an den Einschnittabschnitt ein weiterer Einschnittabschnitt anschließt, welcher Einschnittwände aufweist, die in Fortsetzung der Einschnittwände des erstgenannten Einschnittabschnittes, jedoch in radialer Richtung bis zur Außenfläche der Profilrippe verlaufen, sodass die beiden Einschnittabschnitte gemeinsam einen die Profilrippe durchquerenden Einschnitt bilden.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Draufsicht auf einen Umfangsabschnitt einer Profilrippe eines Laufstreifens eines Fahrzeugluftreifens,
Fig. 2 einen vergrößerten Schnitt entlang der Linie II-II der Fig. 1,
Fig. 3 einen vergrößerten Schnitt entlang der Linie III-III der Fig. 1,
Fig. 4 einen vergrößerten Schnitt entlang der Linie IV-IV der Fig. 1 und
Fig. 5 einen vergrößerten Schnitt entlang der Linie V-V der Fig. 1.

Gemäß der Erfindung ausgeführte Fahrzeugluftreifen sind insbesondere Fahrzeugluftreifen in Radialbauart für Kraftfahrzeuge, vorzugweise für Personenkraftwagen oder Light-Trucks.

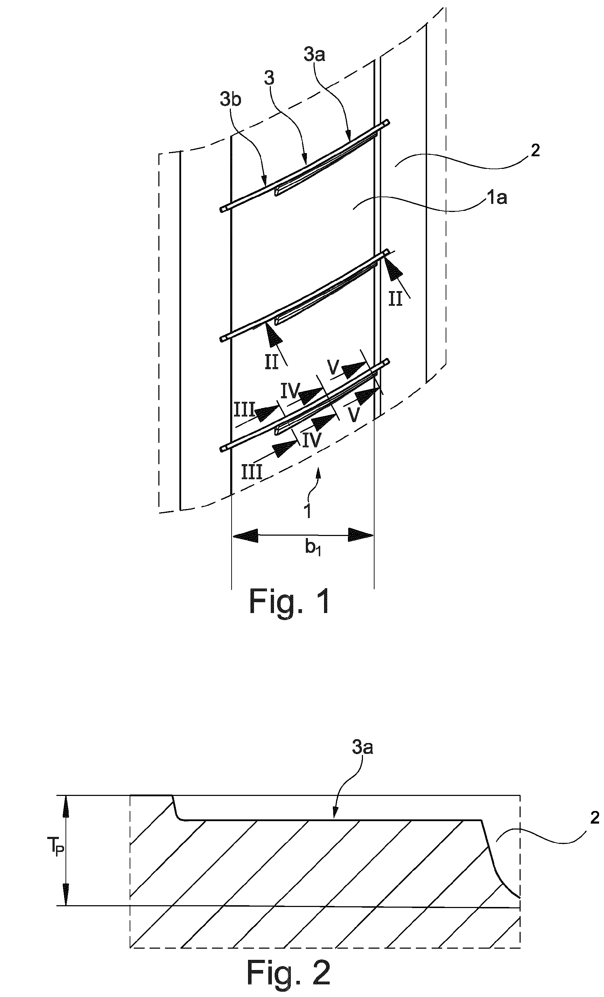

Fig. 1 zeigt beispielhaft einen Umfangsabschnitt einer über den Umfang eines Laufstreifens eines Fahrzeugluftreifens verlaufenden Profilrippe 1 mit einer Außenfläche 1a und einer Breite b₁ (größte in axialer Richtung ermittelte Breite zwischen den Randkanten) an der Außenfläche 1a. Die Profilrippe 1 ist an beiden Seiten von je einer beim gezeigten Beispiel in Umfangsrichtung gerade umlaufenden Umfangsrille 2 begrenzt ist, welche in der für den jeweiligen Reifentyp vorgesehenen maximalen Profiltiefe T_{P} (Fig. 2) ausgeführt ist. An die Umfangsrillen 2 schließen weitere Profilpositive, beispielsweise weitere Profilrippen, an, die lediglich angedeutet sind. Alternativ ist die Profilrippe 1 schulterseitig angeordnet und nur einseitig von einer Umfangsrille 2 begrenzt oder weist zusätzlich Querrillen auf, die eine blockartige Gliederung der Profilrippe 1 bewirken.

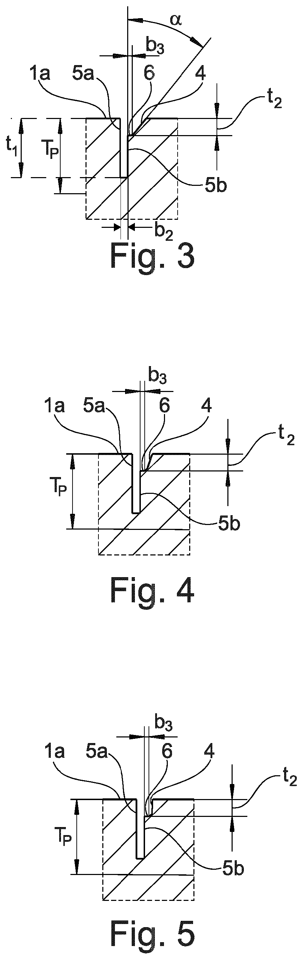

Die Profilrippe 1 ist durch eine Vielzahl von insbesondere parallel zueinander und weitgehend gerade bzw. insgesamt leicht bogenförmig verlaufenden Einschnitten 3 strukturiert, welche die Profilrippe 1 durchqueren und deren gegenseitige Abstände in Umfangsrichtung in der Größenordnung von 20,00 mm bis 35,00 mm betragen und die sich zur axialen Richtung unter einem spitzen Winkel erstrecken, welcher insbesondere bis zu 45° beträgt. Die Einschnitte 3 weisen bei der gezeigten Ausführung über ihren gesamten Verlauf eine konstante oder weitgehend konstante Tiefe t₁ (Fig. 3) von 60 % bis 95 % der Profiltiefe T_{P} auf.

Wie insbesondere Fig. 1 zeigt, setzen sich die Einschnitte 3 über ihre Erstreckung durch die Profilrippe 1 aus zwei Einschnittabschnitten 3a, 3b zusammen, einem kürzeren Einschnittabschnitt 3b und einem längeren Einschnittabschnitt 3a.

Der längere Einschnittabschnitt 3a erstreckt sich ausgehend von der Umfangsrille 2, in welche er einmündet, zumindest bis in den mittleren Bereich bzw. die Mitte der Profilrippe 1 und insbesondere über bis zu 80 % der an der Außenfläche 1a in axialer Richtung ermittelten Breite b₁ der Profilrippe 1. Wie insbesondere Fig. 3 bis Fig. 5 zeigen, weist der Einschnittabschnitt 3a eine in radialer Richtung vom Einschnittgrund bis zur Außenfläche 1 a der Profilrippe 1 verlaufende Einschnittwand 5a auf. Gegenüber der Einschnittwand 5a befindet sich vom Einschnittgrund ausgehend eine weitere Einschnittwand 5b unter einem insbesondere konstanten Abstand (Fig. 3) von 0,40 mm bis 1,00 mm zur Einschnittwand 5a. Die Einschnittwand 5b endet in einer insbesondere konstanten Tiefe t₂, ermittelt von der Außenfläche 1a, wobei die Tiefe t₂ 1,50 mm bis 3,00 mm beträgt. Am radial äußeren Ende der Einschnittwand 5b schließt, den Einschnittabschnitt 3a verbreiternd, ein schmales, streifenförmiges Plateau 6 an, welches über die gesamte Erstreckung des Einschnittabschnittes 3a und parallel zur Außenfläche 1a der Profilrippe 1 orientiert verläuft und eine insbesondere konstante Breite b₃ von 0,30 mm bis 0,80 mm aufweist. Insbesondere ist die Breite b₃ des Plateaus 6 um 0,10 mm bis 0,20 mm geringer als die die dem bereits erwähnten Abstand zwischen den Einschnittwänden 5a, 5b entsprechende Breite b₂ des Einschnittabschnittes 3a (Fig. 3).

Von der äußeren Randkante des Plateaus 6 ausgehend erstreckt sich eine Fase 4 bis zur Außenfläche 1a der Profilrippe 1. Die Fase 4 ist eine Schrägfläche mit einer derartigen Neigung relativ zur radialen Richtung, dass der Einschnittabschnitt 3a (Fig. 1) nahe der Außenfläche 1a der Profilrippe 1 nochmals verbreitert wird, wobei sich die Neigung der Fase 4 über den Verlauf der Fase 4 ändert. An ihrem profilrippeninnenseitigen Ende verläuft die Fase 4 relativ zur radialen Richtung unter ihrem größten Winkel α (vergl. Fig. 3), an ihrem Ende an der Umfangsrille 2 verläuft die Fase 4 unter ihrem kleinsten Winkel α (vergl. Fig. 5). Am profilrippeninnenseitigen Ende der Fase 4 beträgt der Winkel α 20° bis 60°, insbesondere 30° bis 45°, am umfangsrillenseitigen Ende der Fase 4 ist der Winkel α um mindestens 10° kleiner und beträgt 0° bis 10°, insbesondere 0° bis 5°. Das Plateau 6 kann ferner gleichsinnig zur Fase 4 und unter einem Winkel von bis zu 70° zur radialen Richtung geneigt verlaufen.

Zwischen den beiden Enden der Fase 4 ändert sich der Winkel α relativ zur radialen Richtung kontinuierlich vom größten Winkel α beim profilrippeninnenseitigen Ende bis zum kleinsten Winkel α beim umfangsrillenseitigen Ende. Fig. 3 verdeutlicht dies anhand eines etwa in der Mitte des Einschnittabschnittes 3a dargestellten Querschnittes. Dadurch weist der Einschnittabschnitt 3a, an der Außenfläche 1a der Profilrippe 1 betrachtet, an seinem profilrippeninnenseitigen Ende seine größte Breite, bei der Umfangsrille 2 seine kleinste Breite auf.

Der kürzere Einschnittabschnitt 3b ist in radialer Richtung von zwei parallel zueinander verlaufenden Einschnittwänden begrenzt, welche in Fortsetzung der Einschnittwände 5a, 5b aus dem Einschnittabschnitt 3a verlaufen und vom Einschnittgrund bis zur Außenfläche 1a der Profilrippe 1 reichen, sodass der Einschnittabschnitt 3b die konstante Breite b₂ von 0,40 mm bis 1,00 mm, insbesondere von bis zu 0,80 mm, aufweist.

Bei einer alternativen Ausführung sind Einschnitte vorgesehen, die insgesamt wie der beschriebene Einschnittabschnitt 3a ausgebildet sind. Diese Einschnitte enden daher innerhalb der Profilrippe 1.

### Bezugszeichenliste

- 1: Profilrippe
- 1a: Außenfläche
- 2: Umfangsrille
- 3: Einschnitt
- 3a, 3b: Einschnittabschnitt
- 4: Fase
- 5a, 5b: Einschnittwand
- 6: Plateau
- b₁: Breite (Profilrippe 1)
- b₂: Breite (Einschnitt)
- b₃: Breite (Plateau 6)
- t₁: Tiefe (Einschnitt)
- t₂: Tiefe (Plateau 6)
- T_{P}: Profiltiefe
- α: Winkel

## Patentansprüche

1. Fahrzeugluftreifen mit einem Laufstreifen mit zumindest einer in Umfangsrichtung umlaufenden, an zumindest einer Seite von einer Umfangsrille (2) begrenzten Profilrippe (1) mit einer an der Laufstreifenperipherie befindlichen Außenfläche (1a) und mit insbesondere parallel zueinander und unter einem Winkel von bis zu 45° zur axialen Richtung verlaufenden Einschnitten, welche in zumindest eine Umfangsrille (2) münden und innerhalb der Profilrippe (1) enden oder einen innerhalb der Profilrippe (1) endenden, in die Umfangsrille (2) mündenden Einschnittabschnitt (3a) aufweisen, wobei die innerhalb der Profilrippe (1) endenden Einschnitte bzw. die Einschnittabschnitte (3a) über ihre Erstreckung jeweils eine in radialer Richtung zwischen dem Einschnittgrund und der Außenfläche (1a) der Profilrippe (1) verlaufende Einschnittwand (5a) und dieser gegenüberliegend eine mit einer Fase (4) kombinierte, ebenfalls in radialer Richtung verlaufende weitere Einschnittwand (5b) aufweisen, wobei die Fase (4) zur Außenfläche (1a) der Profilrippe (1) und, im Querschnitt des jeweiligen Einschnittes bzw. Einschnittabschnittes (3a) betrachtet, zur radialen Richtung unter einem spitzen Winkel (α) verläuft, wobei zwischen der Fase (4) und der weiteren Einschnittwand (5b), vorzugsweise in einer konstanten Tiefe (t₂) und vorzugsweise parallel zur Außenfläche (1a) der Profilrippe (1) verlaufend, ein eine Breite (b₃) von 0,30 mm bis 0,80 mm aufweisendes Plateau (6) ausgebildet ist, wobei sich der Winkel (α) der Fase (4) relativ zur radialen Richtung von ihrem profilrippeninnenseitigen Ende bis zu ihrem umfangsrillenseitigen Ende kontinuierlich verkleinert,
**dadurch gekennzeichnet,**
**dass** der Winkel (α), den die Fase (4) an ihrem umfangsrillenseitigen Ende mit der radialen Richtung einschließt, um mindestens 10° kleiner ist als der Winkel (α), den die Fase (4) an ihrem profilrippeninnenseitigen Ende mit der radialen Richtung einschließt,
wobei sich der innerhalb der Profilrippe (1) endende Einschnitt bzw. der innerhalb der Profilrippe (1) endende Einschnittabschnitt (3a) bezüglich der an der Außenfläche (1a) in axialer Richtung ermittelten Breite (b₁) der Profilrippe (1) zumindest bis in die Mitte der Profilrippe (1) und insbesondere über bis zu 80 % der an der Außenfläche (1a) in axialer Richtung ermittelten Breite (b₁) der Profilrippe (1) erstreckt.

2. Fahrzeugluftreifen nach Anspruch 1, **dadurch gekennzeichnet, dass** der Winkel (α), den die Fase (4) an ihrem profilrippeninnenseitigen Ende mit der radialen Richtung einschließt, 20° bis 60°, insbesondere 30° bis 45°, beträgt.

3. Fahrzeugluftreifen nach Anspruch 1 oder 2, **dadurch gekennzeichnet, dass** der Winkel (α), den die Fase (4) an ihrem umfangsrillenseitigen Ende mit der radialen Richtung einschließt, 0° bis 10°, insbesondere 0° bis 5°, beträgt.

4. Fahrzeugluftreifen nach einem oder mehreren der Ansprüche 1 bis 3, **dadurch gekennzeichnet, dass** die Tiefe (t₂), in welcher sich das Plateau (6) ausgehend von der Außenfläche (1a) der Profilrippe (1) in radialer Richtung befindet, 1,50 mm bis 3,00 mm beträgt.

5. Fahrzeugluftreifen nach einem oder mehreren der Ansprüche 1 bis 4, **dadurch gekennzeichnet, dass** das Plateau (6) über seine Erstreckung eine konstante Breite (b₃) aufweist.

6. Fahrzeugluftreifen nach einem oder mehreren der Ansprüche 1 bis 5, **dadurch gekennzeichnet, dass** der Einschnitt bzw. der Einschnittabschnitt (3a) radial innerhalb des Plateaus (6) eine Breite (b₂) von 0,40 mm bis 1,00 mm aufweist.

7. Fahrzeugluftreifen nach einem oder mehreren der Ansprüche 1 bis 6, **dadurch gekennzeichnet, dass** bei Einschnitten (3), welche einen innerhalb der Profilrippe (1) endenden, in die Umfangsrille (2) mündenden Einschnittabschnitt (3a) aufweisen, an den Einschnittabschnitt (3a) ein weiterer Einschnittabschnitt (3b) anschließt, welcher Einschnittwände aufweist, die in Fortsetzung der Einschnittwände (5a, 5b) des erstgenannten Einschnittabschnittes (3a), jedoch bis zur Außenfläche (1a) der Profilrippe (1) verlaufen, sodass die beiden Einschnittabschnitte (3a, 3b) gemeinsam einen die Profilrippe (1) durchquerenden Einschnitt (3) bilden.

## Claims

1. Vehicle pneumatic tyre having a tread with at least one profile rib (1) which is of encircling form in a circumferential direction and is delimited on at least one side by a circumferential channel (2) and has an outer surface (1a) on the tread periphery and has sipes which extend in particular parallel to one another and at an angle of up to 45° to the axial direction, said sipes opening out into at least one circumferential channel (2) and ending within the profile rib (1), or having a sipe portion (3a) which opens out into the circumferential channel (2) and ends within the profile rib (1), wherein, over their extent, the sipe portions (3a) or the sipes ending within the profile rib (1) have in each case a sipe wall (5a) extending in the radial direction between the sipe base and the outer surface (1a) of the profile rib (1) and, opposite thereto, a further sipe wall (5b) extending likewise in the radial direction that is combined with a bevel (4), wherein the bevel (4) extends to the outer surface (1a) of the profile rib (1) and, when viewed in a cross-section of the respective sipe or sipe portion (3a), at an acute angle (α) to the radial direction, wherein, between the bevel (4) and the further sipe wall (5b), there is formed, extending preferably at a constant depth (t₂) and preferably parallel to the outer surface (1a) of the profile rib (1), a plateau (6) having a width (b₃) of 0.30 mm to 0.80 mm, wherein the angle (α) of the bevel (4) relative to the radial direction decreases continuously from its profile-rib-inner-side end to its circumferential-channel-side end,
**characterized**
**in that** the angle (α) which the bevel (4) includes with the radial direction at its circumferential-channel-side end is at least 10° smaller than the angle (α) which the bevel (4) includes with the radial direction at its profile-rib-inner-side end, wherein the sipe ending within the profile rib (1) or the sipe portion (3a) ending within the profile rib (1) extends, with respect to the width (b₁) of the profile rib (1) determined at the outer surface (1a) in the axial direction, at least into the centre of the profile rib (1) and in particular over up to 80% of the width (b₁) of the profile rib (1) determined at the outer surface (1a) in the axial direction.

2. Vehicle pneumatic tyre according to Claim 1, **characterized in that** the angle (α) which the bevel (4) includes with the radial direction at its profile-rib-inner-side end is 20° to 60°, in particular 30° to 45°.

3. Vehicle pneumatic tyre according to Claim 1 or 2, **characterized in that** the angle (α) which the bevel (4) includes with the radial direction at its circumferential-channel-side end is 0° to 10°, in particular 0° to 5°.

4. Vehicle pneumatic tyre according to one or more of Claims 1 to 3, **characterized in that** the depth (t₂) at which the plateau (6) is situated in the radial direction when proceeding from the outer surface (1a) of the profile rib (1) is 1.50 mm to 3.00 mm.

5. Vehicle pneumatic tyre according to one or more of Claims 1 to 4, **characterized in that** the plateau (6) has a constant width (b₃) over its extent.

6. Vehicle pneumatic tyre according to one or more of Claims 1 to 5, **characterized in that** the sipe or the sipe portion (3a) has a width (b₂) of 0.40 mm to 1.00 mm radially within the plateau (6).

7. Vehicle pneumatic tyre according to one or more of Claims 1 to 6, **characterized in that**, in the case of sipes (3) having a sipe portion (3a) which opens out into the circumferential channel (2) and ends within the profile rib (1), the sipe portion (3a) is adjoined by a further sipe portion (3b) which has sipe walls extending as a continuation of the sipe walls (5a, 5b) of the former sipe portion (3a), albeit as far as the outer surface (1a) of the profile rib (1), so that the two sipe portions (3a, 3b) together form a sipe (3) that crosses through the profile rib (1).

## Revendications

1. Pneumatique de véhicule avec une bande de roulement avec au moins une nervure profilée (1) s'étendant dans la direction périphérique, délimitée sur moins un côté par une rainure périphérique (2) avec une surface extérieure (1a) se trouvant sur le pourtour de bande de roulement et avec des entailles s'étendant en particulier parallèlement les unes aux autres et s'étendant selon un angle allant jusqu'à 45° par rapport à la direction axiale, lesquelles débouchent dans au moins une rainure périphérique (2) et se terminent à l'intérieur de la nervure profilée (1) ou qui comportent une section d'entaille (3a) se terminant à l'intérieur de la nervure profilée (1), débouchant dans la rainure périphérique (2), les entailles ou les sections d'entaille (3a) se terminant à l'intérieur de la nervure profilée (1) comportant chacune, sur leur extension, une paroi d'entaille (5a) s'étendant dans la direction radiale entre le fond d'entaille et la surface extérieure (1a) de la nervure profilée (1) et, à l'opposé de celle-ci, une autre paroi d'entaille (5b) combinée à un biseau (4), s'étendant également dans la direction radiale, le biseau (4) s'étendant selon un angle aigu (α) par rapport à la surface extérieure (1a) de la nervure profilée (1) et, vu dans la section transversale de l'entaille ou de la section d'entaille (3a) respective, par rapport à la direction radiale, un plateau (6) présentant une largeur (b₃) de 0,30 mm à 0,80 mm étant formé entre le biseau (4) et l'autre paroi d'entaille (5b), de manière à s'étendre de préférence à une profondeur constante (t₂) et de préférence parallèlement à la surface extérieure (1a) de la nervure profilée (1), l'angle (α) du chanfrein (4) diminuant en continu par rapport à la direction radiale depuis son extrémité côté intérieur de nervure profilée jusqu'à son extrémité côté rainure périphérique,
**caractérisé en ce**
**que** l'angle (α) que forme le biseau (4) avec la direction radiale sur son extrémité côté rainure périphérique est inférieur d'au moins 10° à l'angle (α) que forme le biseau (4) avec la direction radiale sur son extrémité côté intérieur de nervure profilée,
l'entaille se terminant à l'intérieur de la nervure profilée (1) ou la partie d'entaille (3a) se terminant à l'intérieur de la nervure profilée (1) s'étendant par rapport à la largeur (b₁), déterminée dans la direction axiale sur la surface extérieure (1a), de la nervure profilée (1) au moins jusqu'au centre de la nervure profilée (1) et en particulier sur jusqu'à 80 % de la largeur (b₁) de la nervure profilée (1) déterminée dans la direction axiale sur la surface extérieure (1a).

2. Pneumatique de véhicule selon la revendication 1, **caractérisé en ce que** l'angle (α) que forme le biseau (4) avec la direction radiale sur son extrémité côté intérieur de nervure profilée va de 20° à 60°, en particulier de 30° à 45°.

3. Pneumatique de véhicule selon la revendication 1 ou 2, **caractérisé en ce que** l'angle (α) que forme le biseau (4) avec la direction radiale sur son extrémité côté rainure périphérique va de 0° à 10°, en particulier de 0° à 5°.

4. Pneumatique de véhicule selon une ou plusieurs des revendications 1 à 3, **caractérisé en ce que** la profondeur (t₂), à laquelle se trouve le plateau (6) dans la direction radiale en partant de la surface extérieure (1a) de la nervure profilée (1), va de 1,50 mm à 3,00 mm.

5. Pneumatique de véhicule selon une ou plusieurs des revendications 1 à 4, **caractérisé en ce que** le plateau (6) présente une largeur constante (b₃) sur son extension.

6. Pneumatique de véhicule selon une ou plusieurs des revendications 1 à 5, **caractérisé en ce que** l'entaille ou la section d'entaille (3a) présente une largeur (b₂) de 0,40 mm à 1,00 mm radialement à l'intérieur du plateau (6).

7. Pneumatique de véhicule selon une ou plusieurs des revendications 1 à 6, **caractérisé en ce que**, dans le cas d'entailles (3), qui comportent une section d'entaille (3a) se terminant à l'intérieur de la nervure profilée (1), débouchant dans la rainure périphérique (2), se raccorde à la section d'entaille (3a) une autre section d'entaille (3b), qui comportent des parois d'entaille, qui, dans le prolongement des parois d'entaille (5a, 5b) de la première section d'entaille (3a) mentionnée, cependant, s'étendent toutefois jusqu'à la surface extérieure (1a) de la nervure profilée (1), si bien que les deux sections d'entaille (3a, 3b) forment ensemble une entaille (3) traversant la nervure profilée (1).
